# EUROPÄISCHE PATENTSCHRIFT

(11) **EP 1 419 355 B1**
(45) Veröffentlichungstag und Bekanntmachung des Hinweises auf die Patenterteilung: **15.12.2004**
(21) Anmeldenummer: 02796243.0
(22) Anmeldetag: 19.08.2002
(51) Int. Cl.: F27D 3/06, F27B 3/18, C21C 5/56, C21C 5/52, F27D 3/00, F27D 13/00

(54) **METALLURGISCHER OFEN UND MATERIALKORB FÜR EINEN METALLURGISCHEN OFEN**
METALLURGICAL OVEN AND A MATERIAL BASKET FOR A METALLURGICAL OVEN
FOUR METALLURGIQUE ET PANIER A MATIERE POUR LEDIT FOUR

(30) Priorität: 20.08.2001 DE 10140805
(43) Veröffentlichungstag der Anmeldung: 19.05.2004
(73) Patentinhaber: Vai Fuchs GmbH, 77731 Willstätt-Legelshurst (DE)
(72) Erfinder: FUCHS, Gerhard, 77694 Kehl-Bodersweier (DE)
(74) Vertreter: Kramer Barske Schmidtchen
(86) Internationale Anmeldenummer: PCT/EP2002/009255
(87) Internationale Veröffentlichungsnummer: WO 2003/019096

(56) Entgegenhaltungen:
- WO-A-95/04910
- WO-A-95/12690
- DE-A- 4 424 324
- US-A- 2 824 762

## Beschreibung

### Technisches Gebiet

Die Erfindung betrifft einen metallurgischen Ofen, insbesondere einen elektrischen Lichtbogenofen, gemäß dem Oberbegriff des Patentanspruchs 1 und einen Materialkorb für die Hüttentechnik.

### Stand der Technik

Ein metallurgischer Ofen wie ein elektrischer Lichtbogenofen, wie er aus der WO 98/08041 A1 bekannt ist, weist ein Gefäß, das bevorzugterweise aus einem Untergefäß und einem O-bergefäß besteht, einen Deckel für das Gefäß, und eine als Schacht ausgebildete Chargiervorrichtung, in der ein verschwenkbares Rückhaltemittel angeordnet ist, auf. Bei der Vorrichtung wird das gesamte Chargiergut (zum Beispiel Schrott) für einen Einschmelzvorgang auf einmal chargiert. Da das Volumen des eingeschmolzenen Materials, insbesondere bei Schrott, wesentlich geringer als im nichtgeschmolzenen Zustand ist, reicht das von dem Gefäß und dem Deckel begrenzte Volumen nicht aus, um das gesamte Chargiergut für einen Einschmelzvorgang aufzunehmen. Daher steht ein Teil des nicht eingeschmolzenen Chargiergutes als Säule in dem Schacht.

Als Folge kann das Rückhaltemittel, das durch mehrere schwenkbar gelagerte Finger gebildet wird, so lange nicht in den Schließzustand zurückgeschwenkt werden, bis die Säule des Chargiergutes auf ein Maß zusammengeschmolzen ist, das die Oberseite der Säule unterhalb des Schwenkbereichs des Rückhaltemittels liegt (siehe insbesondere Fig. 4 der WO 98/08041 A1).

Damit das gesamte Chargiergut auf einmal in den Ofen chargiert werden kann, muß entweder der Schacht ein entsprechendes Volumen aufweisen, was aufgrund der räumlichen Verhältnisse, insbesondere der Anordnung der Elektroden, bei dem Lichtbogenofen dazu führt, daß der Schacht sehr hoch ausgebildet werden muß. Alternativ kann der Schacht nur zur Aufnahme eines Teils des auf einmal zu chargierenden Chargierguts ausgebildet sein. Dann muß weiteres Chargiergut mittels eines Krans und eines Materialkorbs (zum Beispiel ein Schrottkorb) durch den Schacht hindurch chargiert werden. In jedem Fall wird auch der Schacht von oben mit dem Chargiergut beladen, so daß noch ausreichend Raum für die Beladevorrichtung wie einen Kran oder ähnliches über dem Schacht vorhanden sein muß. Insgesamt resultiert diese Anordnung in einer sehr großen Höhe, die in dem Gebäude des Stahlwerks über dem Schacht vorhanden sein muß.

Beim Beladen des Schachtes mit dem Chargiergut, zum Beispiel mit Schrott, fällt das Chargiergut aus einer Höhe von 4 bis 6 m, weil das Material von oben in den Schacht fallengelassen werden muß. Dies führt zu der Möglichkeit einer Beschädigung des Rückhalteorgans und/oder der Schachtwände.

Aufgrund der notwendigen Bauhöhe wird ein Lichtbogenofen der Art, wie er in der WO 98/08041 A1 beschrieben ist, normalerweise mit einem Schacht gebaut, der für die Hälfte der notwendigen Chargiergutmenge ausgelegt ist Der Rest des Chargierguts für einen Einschmelzvorgang wird mittels eines Materialkorbs (Schrottkorb) von oben durch den Schacht in den Ofen chargiert. Da nur der Teil des Chargierguts (Schrott), der in dem Schacht während der Feinungsperiode der vorhergehenden Charge gelagert war, vorgewärmt ist, ist ein nennenswerter Teil des Chargierguts zum Beginn des Einschmelzvorgangs auf relativ niedriger Temperatur, so daß das Abgas, das durch den Schacht zieht, auf sehr niedriger Temperatur ist. Dieses ist aus bekannten Gründen nachteilig im Hinblick auf Schadstoffe, insbesondere sogenannte VOCs (Volatile Organic Compounds). Zum Beispiel müssen VOCs bei einer Temperatur von ca. 700 bis 800°C verbrannt und das resultierende Abgas dann gequencht (schnell abgekühlt) werden, damit es nicht zur erneuten Bildung von Schadstoffen kommt. Das durch den Schacht und das kalte Chargiergut ziehende Abgas hat bei weitem nicht die entsprechende Temperatur, so daß in einer Nachbrennkammer ein erheblicher Energieeinsatz notwendig ist, um die VOCs zu vernichten. Dieses resultiert in erhöhten Betriebskosten.

Da der Schacht und das durch die Finger gebildete Rückhaltemittel während aller Betriebszyklen auf dem Ofen sitzen, ist aus thermischen Gründen eine Kühlung des Rückhaltemittels und mindestens des unteren Teils des Schachtes notwendig. Die entsprechende Ausbildung des Schachtes führt dazu, daß ein Traggerüst für den Schacht notwendig ist, das einerseits die Kühlung und die notwendigen Versorgungen hält und andererseits ein ausreichendes Wiederlager für den durch den Schacht chargierten Schrott bildet. Außerdem treten beim Chargieren des Chargierguts, insbesondere von Schrott durch den Schacht, erhebliche dynamische Kräfte durch die hohe Fallhöhe auf, die die Gefahr von Beschädigungen des Schachtes und der Finger, insbesondere der Kühlung, mit sich bringen. Aufgrund der hohen dynamischen Kräfte ist es auch notwendig, die Finger des Rückhalteorgans aufwendig, zum Beispiel mit Federpaketen, einzeln und austauschbar zu lagern. Dieses resultiert in einem erhöhten Aufwand der Konstruktion und dem dafür notwendigen Volumen für das Rückhaltemittel.

Aufgrund der obigen Gegebenheiten ist das Volumen des Schachtes, insbesondere durch das Vorhandensein des Gerüstes, der Kühlung etc. relativ groß, so daß der Schacht, um den notwendigen Abstand zu den in der Mitte des Gefäßdeckels befindlichen Elektroden zu wahren, relativ weit entfernt von der Mitte in Richtung des Rands des Deckels bzw. des Gefäßes angeordnet werden muß.

Aus der EP 0 672 881 A1 ist ein Lichtbogenofen bekannt, bei dem zwei Chargierschächte vorgesehen sind, wobei diese Schächte Chargieröffnungen aufweisen, die seitlich an den Seitenwänden der aus Gefäß und Deckel gebildeten Einheit angeordnet sind.

Aus der DE 44 24 324 A1 und der DE 43 26 369 A1 sind jeweils durch geteilte Finger gebildete Rückhaltemittel für einen Schacht bekannt. In der DE 44 24 324 A1 ist in der Fig. 1 die Situation bei einem herkömmlichen Lichtbogenofen dargestellt, bei dem ein Materialkorb 27 oberhalb des Schachtes zum weiteren Chargieren von Chargiergut befindlich ist, was in der oben beschriebenen notwendigen lichten Höhe über dem Schacht resultiert.

Aus der JP 7-332836 (A) ist ein Lichtbogenofen mit einem Schacht bekannt, in dem zwei Chargen übereinander, jeweils durch entsprechende Rückhalteorgane, gehalten werden. Aus der Steel Times International, November 1995, ist der sogenannte "Daido MSP-DCArc Furnace" bekannt, der auch in einem Paper zur SEAISI 1996 THAILAND CONFERENCE unter dem Titel "Development of MSP-DC EAF Process" veröffentlicht ist. Dieser Ofen weist eine als Schacht ausgebildete Chargiervorrichtung auf. In dem Schacht sind senkrecht übereinander zwei Kammern angeordnet. Jede der Kammern ist an ihrer Unterseite durch ein schwenkbares Rückhaltemittel verschließbar. Der gesamte Schacht kann zu Wartungszwecken oder ähnlichem seitlich gegenüber dem Ofengefäß verfahren werden. Die Kammern des Schachtes werden von oben mittels eines Schrottkorbes beladen.

Es ist eine Aufgabe der vorliegenden Erfindung, einen verbesserten metallurgischen Ofen und einen für einen solchen Ofen angepaßten selbsttragenden Materialkorb anzugeben.

Diese Aufgabe wird gelöst durch einen Ofen nach Anspruch 1 bzw. einen selbsttragenden Materialkorb nach Anspruch 15.

Weiterbildungen der Erfindung sind in den Unteransprüchen angegeben.

Bei dem metallurgischen Ofen kann das Rückhaltemittel sofort nach dem Chargieren zum Schließen der Chargiervorrichtung zurückgeschwenkt werden. Das führt einerseits dazu, daß bei einer Ausbildung der Chargiervorrichtung mit entsprechenden wechselbaren Materialkörben der entsprechende Materialkorb sofort nach dem Entladen ausgetauscht werden kann, und andererseits dazu, daß im oberen Bereich des Ansatzes ein leerer Raum vorhanden ist, in dem ggfs. eine Beeinflussung des Abgases möglich ist.

Beim Ausbilden der Chargiervorrichtung mit den austauschbaren Materialkörben entfällt die Notwendigkeit der Kühlung des Rückhaltemittels und des Schachtes, da diese bei der relativ kurzen Verweilzeit oberhalb des Ansatzes nicht so stark aufgeheizt werden, daß eine Kühlung notwendig ist.

Beim Ausbilden der Chargiervorrichtung mit den austauschbaren Materialkörben entfällt weiterhin die Notwendigkeit der großen lichten Höhe über dem Ofen, da die Materialkörbe durch seitliches Führen über den Ansatz ausgetauscht werden können.

Da in dem leeren Raum des Ansatzes oberhalb des chargierten Chargierguts normalerweise immer die Zündtemperatur für die Verbrennung von Kohlenstaub und/oder CO gegeben ist, kann durch einfaches Zuführen von Kohlenstaub und/oder Sauerstoff die Abgastemperatur/Abgaszusammensetzung in einer sehr einfachen und kostengünstigen Weise eingestellt werden.

Bei Ausbildung der Chargiervorrichtung mit den austauschbaren Materialkörben entfällt die Notwendigkeit des Schachtgerüstes und der Wasserkühlung, so daß die entsprechenden Materialkörbe bei gleichem Chargiervolumen wesentlich näher an den Elektroden als die herkömmlichen Schächte angeordnet werden können. Darum ist es möglich, eine in der Draufsicht runde anstatt einer hufeisenförmigen Gefäßform zu verwenden.

Weitere Merkmale und Vorteile ergeben sich aus der Beschreibung von Ausführungsbeispielen anhand der Figuren. Von den Figuren zeigen:
- Fig. 1: einen metallurgischen Ofen einer ersten Ausführungsform der Erfindung in einer Vorderansicht a) im Schnitt, einer Seitenansicht b) im Schnitt, die von links in Fig. 1a) genommen ist und einer Draufsicht c) im Schnitt;
- Fig. 2: die Vorderansicht aus Fig. 1a) in Vergrößerung;
- Fig. 3: die Seitenansicht aus Fig. 1b) in Vergrößerung;
- Fig. 4: die Draufsicht aus Fig. 1c) in Vergrößerung;
- Fig. 5: den metallurgischer Ofen der ersten Ausführungsform aus Fig. 1, der zum Betrieb als Lichtbogenofen ohne Schacht mittels eines Deckels verschlossen ist, in einer Vorderansicht a) im Schnitt, einer Seitenansicht b) im Schnitt, die von links in Fig. 5a) genommen ist, und einer Draufsicht c) im Schnitt;
- Fig. 6: die Vorderansicht aus Fig. 5a) in Vergrößerung;
- Fig. 7: die Seitenansicht aus Fig. 5b) in Vergrößerung;
- Fig. 8: die Draufsicht aus Fig. 5c) in Vergrößerung;
- Fig. 9: eine zweite Ausführungsform des metallurgischen Ofens in einer Vorderansicht a) im Schnitt in einem Stahlwerk, einer Seitenansicht b) im Schnitt, die von links in Fig. 9a) genommen ist, und einer Draufsicht c) im Schnitt; und
- Fig. 10: einen Materialkorb nach einer Ausführungsform der Erfindung auf einem Transportwagen in einer Schnittansicht.

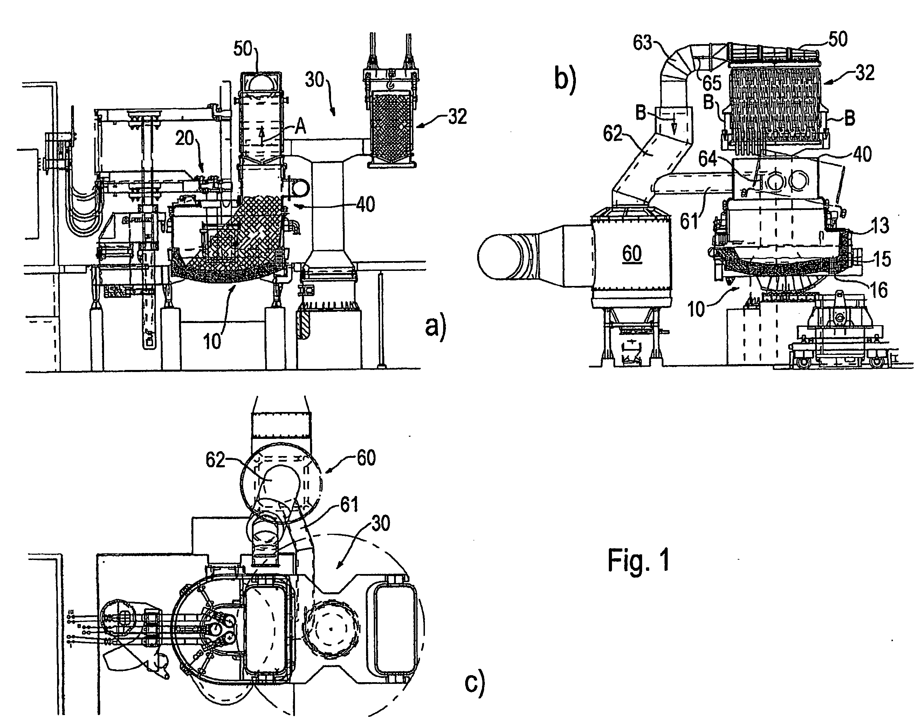

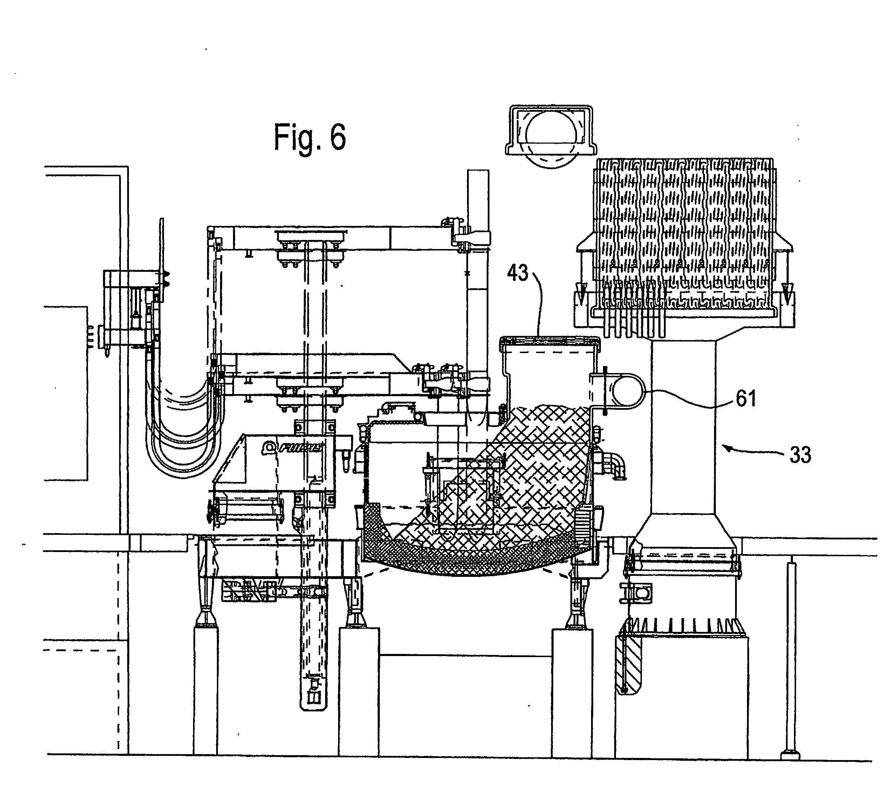

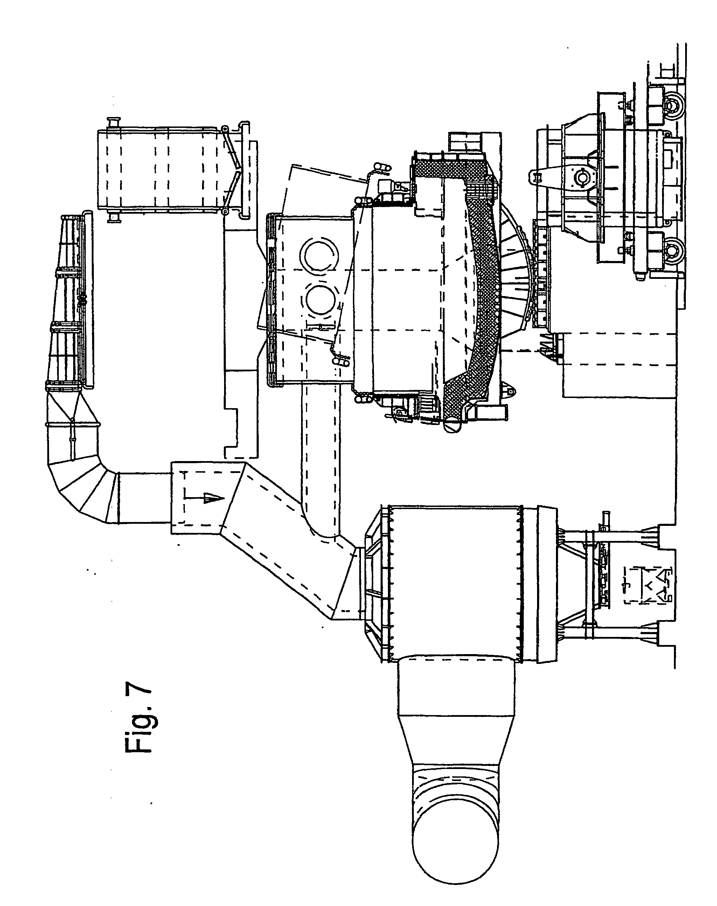

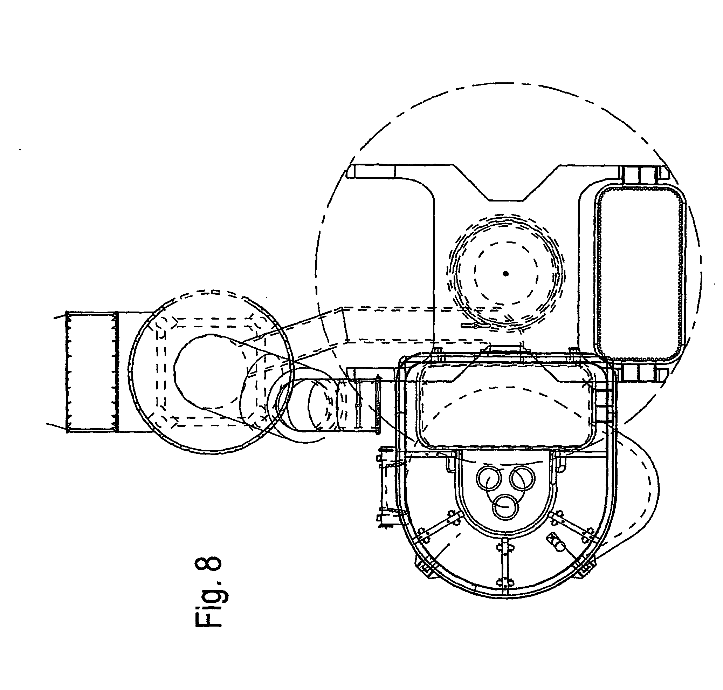

Nachfolgend wird unter Bezugnahme auf die Fig. 1 bis 8 eine erste Ausführungsform eines metallurgischen Ofens nach der Erfindung beschrieben, die die bevorzugte Ausführungsform darstellt

In den Fig. 1 bis 4 ist die erste Ausführungsform in einer ersten Konfiguration gezeigt, in der Materialkörbe 32, die mittels einer Wechselvorrichtung 30 über einem Ansatz 40 positionierbar sind, als Schacht verwendet werden.

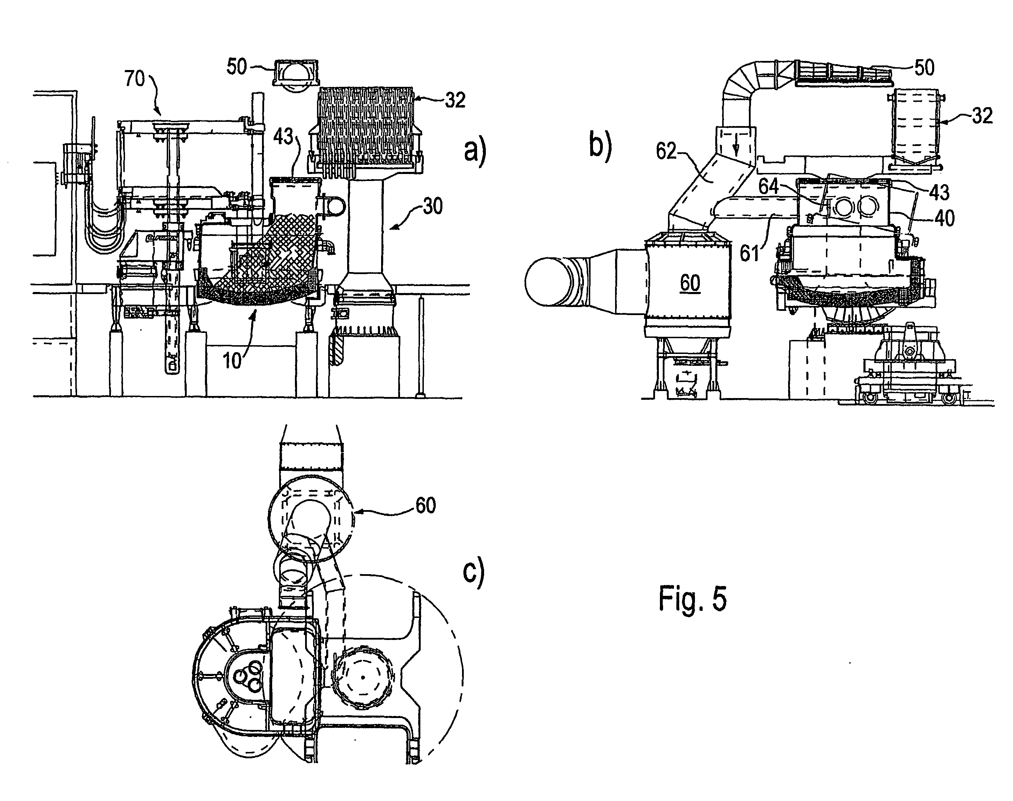

In den Fig. 5 bis 8 ist eine zweite Konfiguration der ersten Ausführungsform dargestellt, bei der die Chargieröffnung 42 des Ansatzes 40 mittels eines Deckels 43 beim Schmelzvorgang nach der Art eines herkömmlichen Lichtbogenofens ohne Schacht verschlossen ist. Diese Konfiguration kann zur Aufrechterhaltung des Betriebes verwendet werden, wenn an der Wechselvorrichtung und/oder den Materialkörben oder ähnlichem Wartungsarbeiten auszuführen sind.

Es wird nun die erste Konfiguration unter Bezugnahme auf die Fig. 1 bis 4 beschrieben.

Die erste Ausführungsform ist als ein Lichtbogenofen mit einem auf einer Ofenwiege 2 gelagerten Ofengefäß 10 ausgebildet. Das Ofengefäß 10 besteht aus einem Gefäßunterteil 11, das durch einen gemauerten Ofenherd gebildet wird, und einem Gefäßoberteil 12, das in üblicher Weise aus wassergekühlten Elementen gebildet ist. Das Ofengefäß weist einen Erker 13 mit einem Abstichloch 15 und einer Verschlußvorrichtung 16 für das Abstichloch 15 auf.

Der Ofen weist weiter einen Deckel 20 auf, der in üblicher Weise aus wassergekühlten Elementen gebildet ist und in üblicher Weise Öffnungen zum Einfahren und Ausfahren der Elektroden 71 in das und aus dem Ofengefäß aufweist. Bei der in den Fig. 1 bis 4 gezeigten ersten Ausführungsform weist der Deckel einen, in der Draufsicht des Gefäßes 10 und des Deckels 20 auf einer Seite der Elektroden angeordneten Ansatz 40 auf. Der Ansatz 40 ist aus wassergekühlten Elementen ausgebildet und mit dem Deckel 20 verbunden.

Nach einer alternativen Ausführung kann der Ansatz 40 auch getrennt von dem Deckel 20 ausgebildet sein. Der Ansatz 40 kann dann als separates Teil oder als Teil des Gefäßes 10 ausgebildet werden.

Bevorzugt ist die Ausbildung als Teil des Deckels 20, da dann der Ansatz, zum Beispiel bei Wartungsarbeiten, zusammen mit dem Deckel 20 mit der Hubvorrichtung für den Deckel abgehoben und weggeschwenkt bzw. weggefahren werden kann.

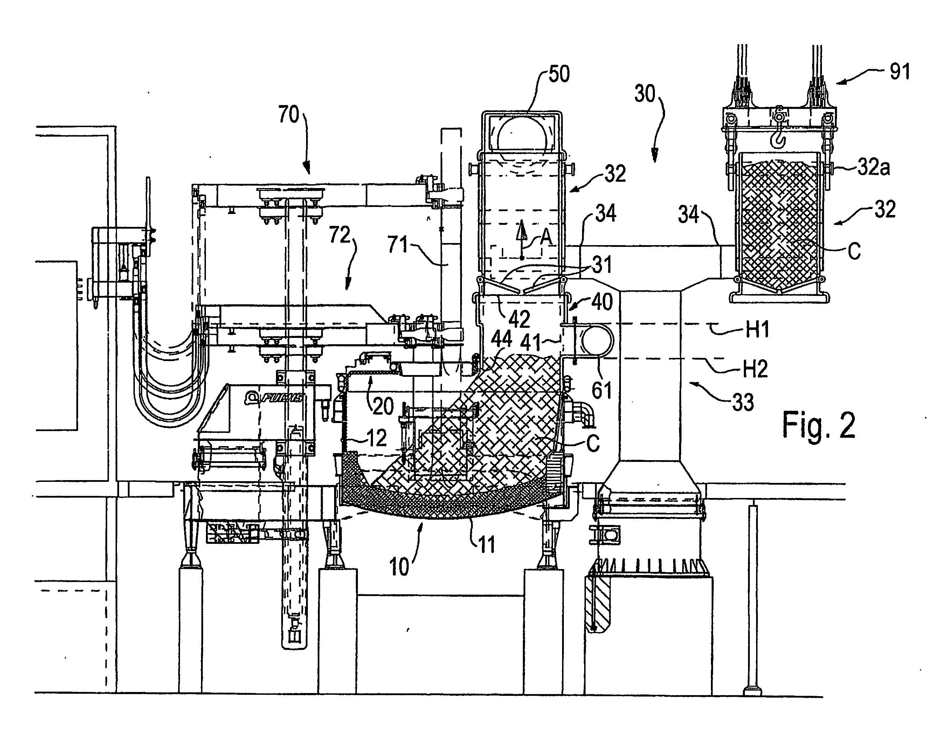

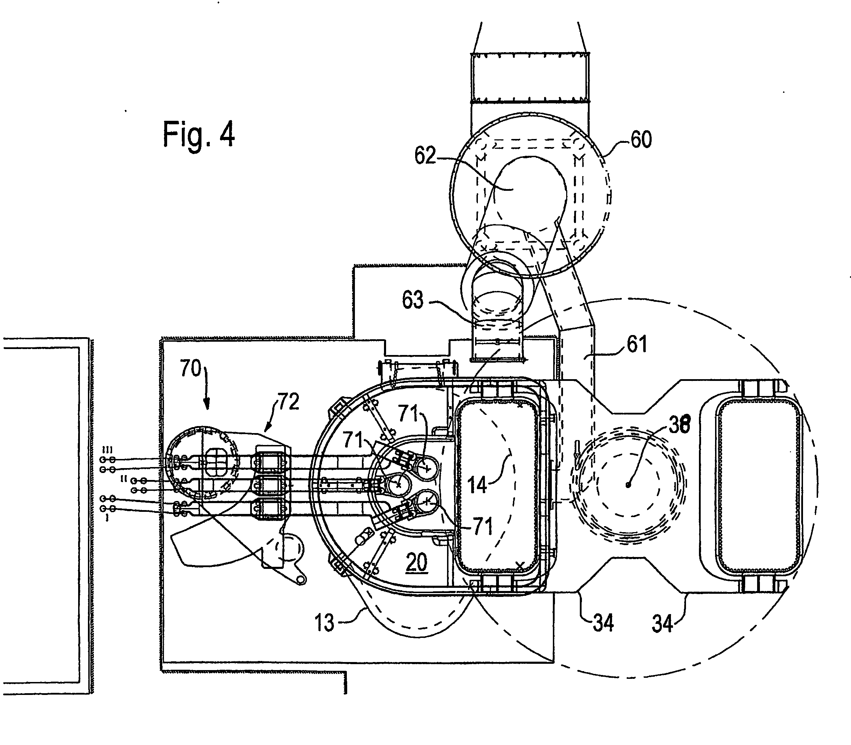

Der Ansatz 40 ist im wesentlichen zylindrisch mit einem in horizontaler Richtung im wesentlichen rechteckigen Querschnitt. Bei der in den Fig. 1 bis 4 gezeigten ersten Ausführungsform weist der Ansatz 40 in der nicht gekippten Position des Ofengefäßes im wesentlichen senkrechte Wände auf. Wie in den Fig. 2 und 4 zu erkennen ist, erfolgt die Anpassung der im wesentlichen rechteckigen Form des Ansatzes an den aus einem Schnitt in horizontaler Richtung resultierenden, im wesentlichen runden Querschnitt (gestrichelte Linie 14 in Fig. 4) des Ofengefäßes im wesentlichen durch eine entsprechende Ausbildung der Seitenwände des Obergefäßes 12.

Alternativ kann die entsprechende Anpassung in der Form des Ansatzes 40 vorgenommen werden, so daß die Wände des Gefäßes 12 bereits senkrecht und an die Form des Untergefäßes angepaßt sind. Diese alternative Ausführung, die in den Fig. 1 bis 4 nicht gezeigt ist, wird bevorzugt, da dadurch die Fallhöhe des Chargiergutes auf die schrägen Wände und deren resultierende dynamische Belastung vermindert werden.

Der Ansatz 40 weist seitlich über der Höhe H2 und unter der Höhe H1 eine Öffnung 41 auf, die als Absaugöffnung zum Absaugen von Abgas dient. Die Absaugöffnung 41 ist über eine Abgasleitung 61 mit einer Abgashauptleitung 62, die in eine Nachverbrennungskammer 60 mündet, verbunden. In der Abgasleitung 61 ist eine gesteuerte Ventilklappe 64 vorgesehen. Der Ansatz 40 weist eine nach oben offene Öffnung 42, die eine Chargieröffnung für den Ofen ist, auf.

Eine Chargiervorrichtung 30, die einen Drehturm 33 als eine Ausführung einer Wechselvorrichtung aufweist, ist zum Chargieren von Chargiergut, im vorliegenden Fall von Schrott als Einsatzmaterial, vorgesehen.

Bei der ersten Ausführungsform ist eine Elektrodenanordnung 70 mit einer Elektrodenhalteund Verfahrvorrichtung 72 zum Halten und Verfahren der Elektroden 71 auf der einen Seite (der linken Seite in Fig. 2) und die Chargiervorrichtung 30 auf der entsprechenden anderen Seite des Ofengefäßes 10 (der rechten Seite in Fig. 2) angeordnet.

Die Wechselvorrichtung 33, die als Drehturm ausgebildet ist, weist zwei, gegenüber der vertikalen Drehachse 38 des Drehturms 33 um 180° versetzte Ausleger 34 auf, die jeweils zum Halten eines Materialkorbes 32 ausgebildet sind. Die Ausleger 34 sind so bemessen, daß ein von ihnen gehaltener Materialkorb 32 über der Chargieröffnung 42 des Ansatzes 40 positionierbar ist. Die Wechselvorrichtung ist so ausgebildet, daß die Ausleger 34 und damit die Materialkörbe 32 in Richtung des Pfeils A (siehe Fig. 2) nach oben anhebbar oder in der entgegengesetzten Richtung nach unten absenkbar sind.

Derart ist die Chargiervorrichtung 30 so ausgebildet, daß durch Anheben in Richtung des Pfeils A der leere Materialkorb 32 (links in Fig. 2) angehoben, durch Drehen der Wechselvorrichtung um die Achse 38 um 180° gegen den vollen Materialkorb 32 (rechts in Fig. 2) ausgetauscht, und der volle Materialkorb 32 dann durch Absenken in der Richtung entgegengesetzt des Pfeils A auf den Ansatz 40 über der Chargieröffnung 42 abgesenkt werden kann. Dabei werden zu jedem Zeitpunkt die Materialkörbe 32 von den Auslegern 34 der WechselVorrichtung 30 gehalten und nicht von dem Ansatz 40 getragen. Der Übergang zwischen den Materialkörben 32 und dem Ansatz 40 kann in geeigneter Weise zum Beispiel durch Schürzen abgedichtet werden.

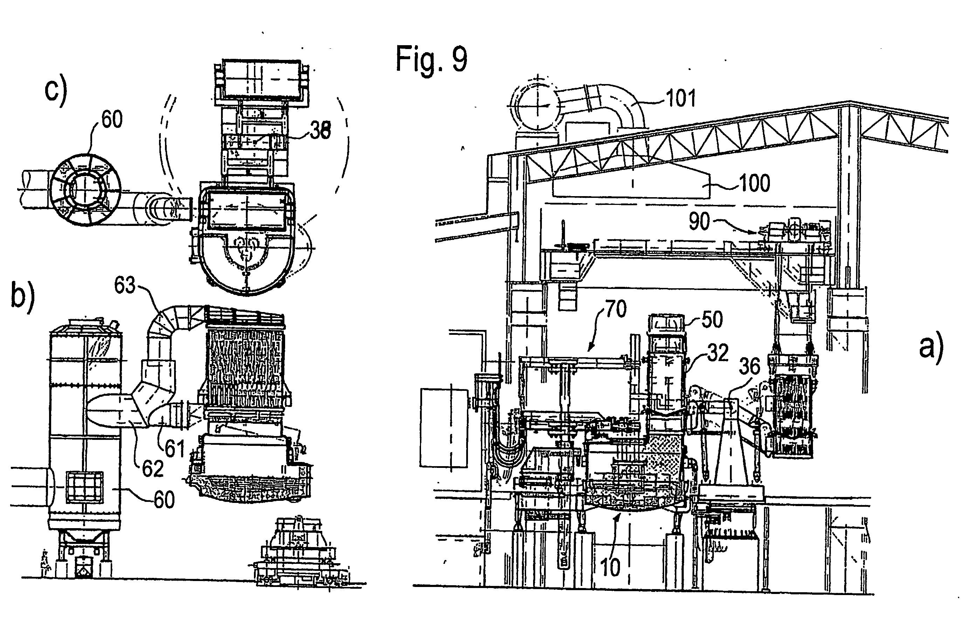

Bei der in den Fig. 1 bis 4 gezeigten Ausführungsform werden die Ausleger 34 insgesamt in Richtung des Pfeils A nach oben angehoben bzw. in der entgegengesetzten Richtung abgesenkt. Alternativ kann, wie in Fig. 9 zu sehen ist, die Wechselvorrichtung mit einzeln um eine horizontale Achse 36 verschwenkbaren Auslegern 34 oder mit nach Art einer Wippe um eine horizontale Achse 36, verschwenkbaren Auslegern 34 ausgebildet sein. Die Ausbildung mit dem um die horizontale Achse verschwenkbaren Auslegern 34 ergibt eine weitere Ersparnis in der Höhenrichtung der Halle des Stahlwerkes. Bei besonderen Anforderungen an eine Reduzierung der Höhe ist daher diese Ausführungsform zu bevorzugen.

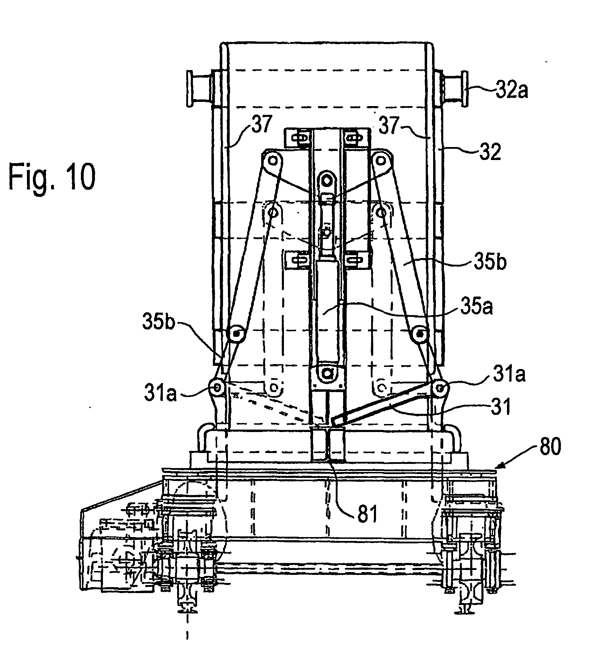

Eine Ausführungsform des Materialkorbs 32, der als ein Schrottkorb ausgebildet ist, ist in Fig. 10 in größerem Detail in einem Zustand gezeigt, in dem der Schrottkorb 32 auf einem Wägen 80 gelagert ist. Der Schrottkorb 32 weist, wie in der Draufsicht in Fig. 4 gut zu erkennen ist, einen aus einem Schnitt in horizontaler Richtung resultierenden, rechteckigen Querschnitt auf. An den den längeren Seiten des Rechtecks entsprechenden Seitenwänden sind Vorsprünge 32a ausgebildet, die ein Eingreifen von Halteelementen 91 eines Krans 90 (siehe Fig. 2 und 9) ermöglichen. An der Unterseite dieser längeren Seitenwände ist jeweils eine Welle 31a vorgesehen, auf denen Finger 31 des Rückhaltemittels (Rückhalteorgans) angelegt/angelenkt sind. Die Finger 31 weisen eine Länge auf, die im wesentlichen der halben Länge (bevorzugterweise etwas mehr) der kurzen Seite der Rechteckform entsprechen, wie in Fig. 10 gut zu sehen ist. Die Finger sind seitlich voneinander so beabstandet, zum Beispiel mit einem ihrer Breite entsprechenden Abstand, daß ein Zwischenraum zum Durchtritt von Gas verbleibt. Die Finger 31 sind um die Wellen 31a mittels eines Stellgliedes 35 zum Schließen und Öffnen der Unterseite des Schrottkorbes 32 verschwenkbar. Das Stellglied 35 weist einen Hydraulikzylinder 35a und eine Hebelanordnung 35b auf, mittels derer die Finger 31 um die Welle 31a in der beschriebenen Weise verschwenkt werden, wie in Fig. 10 zu erkennen ist. Das Stellglied 35 kann entweder nur auf einer kurzen Seite oder auf beiden kurzen Seiten des Schrottkorbes 32 vorgesehen sein.

Der Schrottkorb 32 wird in einem Chargiergutlager, zum Beispiel in dem Schrottsammellager des Stahlwerkes, beladen. Dabei werden die Finger 31 an ihren freien Enden durch ein Widerlager 81, das an dem Wagen 80 vorgesehen ist, von unten gelagert. Die Finger 31 sind daher beim Beladen des Schrottkorbes 32 an beiden Enden fest gelagert, so daß eine stabile untere Begrenzung des Schrottkorbes 32 gebildet wird.

Der Innenraum des Schrottkorbes 32 weist ein vorbestimmtes Volumen C auf und ist mit wärmespeichernden Platten (Thermoplatten) 37 ausgekleidet, die bei der bevorzugten Ausführungsform Gußplatten aus Stahl sind. Die Finger 31 sind bei der bevorzugten Ausführungsform aus Stahlbrammen geschnitten und weisen einen Querschnitt von ca. 300 mm (horizontal) x 200 mm auf. Je nach Anforderung können die Längsabmessung anders gewählt werden, wobei eine Stärke von 100 mm nicht unterschritten werden sollte.

Der Schrottkorb 32 weist weder an den Fingern 31 noch an den Seitenwänden 37 eine Wasserkühlung auf.

Weiterhin wird der Schrottkorb 32 auf dem Schrottplatz in Portionen der Gesamtfüllmenge beladen, z.B. indem durch einen Bagger oder ähnliches 3 bis 5 t Schrott auf einmal in den Schrottkorb, der zum Beispiel 50 t oder 80 t faßt, chargiert werden, so daß die dynamischen Kräfte beim Beladen minimiert sind. Daher muß der selbsttragende Aufbau des Schrottkorbs 32 keine so hohen dynamischen Kräfte aufnehmen, wie sie beim gleichzeitigen Chargieren von 50 t oder 80 t Schrott in den Schacht des herkömmlichen Ofens auftreten. Die Struktur des Schrottkorbes 32 ist daher lediglich zum Halten des Gewichtes und nicht zur Aufnahme der dynamischen Kräfte, die beim Fallen von 80 t Schrott aus 6 m Höhe entstehen, ausgelegt. Dieses spart Kosten und reduziert die Außenabmessungen gegenüber einem Schacht gleichen Innenvolumens erheblich.

Der in Fig. 10 gezeigte Schrottkorb 32 weist den ungefähr rechteckigen Querschnitt auf. Bei einer anderen Ausführungsform des Schrottkorbes ist wenigstens die eine Seitenwand, die im Betrieb in der Position auf dem Ansatz 40 die Elektrodenanordnung 70 anblickt (die in Fig. 4 linke Seitenwand des über dem Ansatz 40 befindlichen Schrottkorbs) konvex ausgebildet, wobei diese Außenwand einen Krümmungsradius in horizontaler Richtung aufweist, die dem Radius R (siehe Fig. 4) der Schwenkbewegung der Außenwand um die Achse 38 beim Drehen des Drehturms 33 entspricht. Dadurch kann der Korb ein höheres Volumen aufweisen und näher an die Elektroden gebracht werden, ohne beim Verschwenken mit den Elektroden 71 bzw. der Elektrodenanordnung 70 zu kollidieren.

Es ist klar, daß auch eine oder mehrere der übrigen Außenwände zur Erhöhung des Volumens des Innenraums konvex ausgebildet werden können. Dabei kann entweder der gleiche Krümmungsradius gewählt werden, damit der Schrottkorb in beiden möglichen Orientierungen verwendet werden kann, oder es wird die der Elektrodenanordnung entgegengesetzt angeordnete Seitenwand zum Beispiel an die Außenform der Gefäßwand angepaßt. Bei dieser Ausbildung ist natürlich auch die Form des Ansatzes 40 im horizontalen Querschnitt an den horizontalen Querschnitt des Schrottkorbes 32 mit der einen oder den mehreren konvexen Außenwänden angepaßt.

Alternativ ist es auch möglich, den Schrottkorb 32 und den Ansatz 40 so auszubilden, daß der Schrottkorb 32 einen aus einem Schnitt in horizontaler Richtung resultierenden, rechteckigen Querschnitt derart aufweist, daß die Ecken des Schrottkorbes bei der Position über dem Ansatz über den Kreis mit dem Radius R (siehe Fig. 4) vorstehen, so daß beim Schwenken des Korbes um die Achse 38 die Ecken des Schrottkorbes 32 mit den Elektroden kollidieren würden. Für diesen Fall ist der Ausleger 34 so ausgebildet, daß der Schrottkorb vor dem Drehen radial in Richtung der Drehachse 38 bewegt wird, bis die Ecken auf oder innerhalb des Radius R, der gerade nicht mehr mit den Elektroden kollidiert, liegen. Dieses kann einerseits durch eine Bewegung in horizontaler Richtung oder, wie es zum Beispiel mit der in Fig. 9 gezeigten Ausführungsform möglich ist, durch eine Schwenkbewegung um eine horizontale Drehachse 36 erreicht werden, die ebenfalls eine radiale Komponente hat.

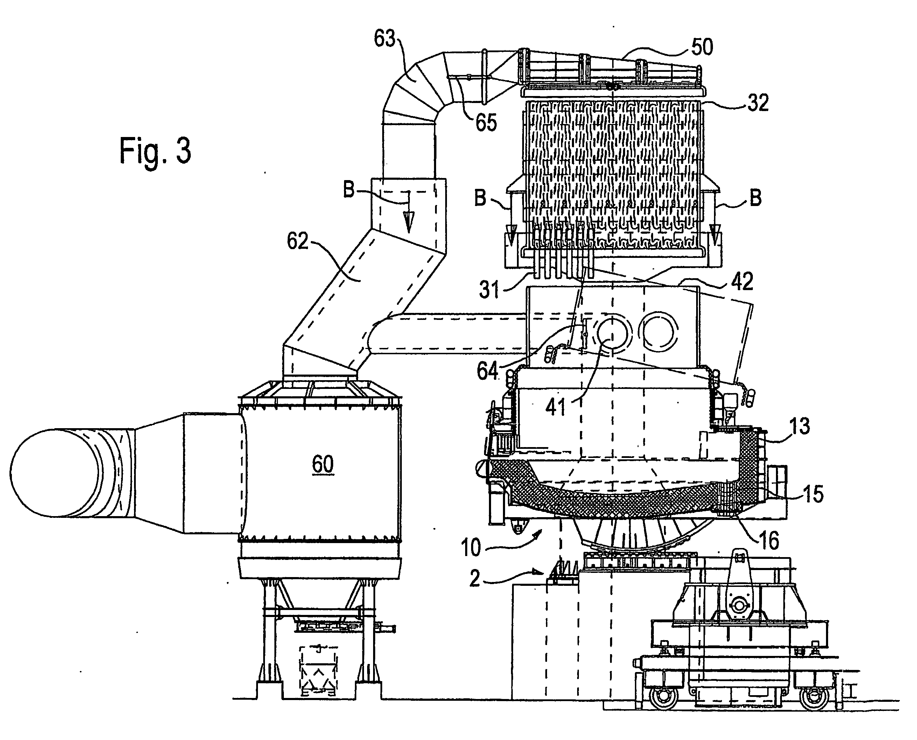

Der Ofen der ersten Ausführungsform weist weiter eine Absaughaube 50 auf, die in senkrechter Richtung auf und ab bewegbar und im wesentlichen senkrecht über dem Ansatz 40 aufgehängt ist. Die Absaughaube 50 ist über eine Abgasleitung 63 mit der Hauptabgasleitung 62 verbunden. In der Abgasleitung 63 ist eine steuerbare Ventilklappe 65 vorgesehen. Die Absaughaube 50 ist zusammen mit der Abgasleitung 63 in Richtung des Pfeils B (siehe Fig. 3) absenkbar bzw. in der entgegengesetzten Richtung anhebbar. Dieses Anheben und Absenken ist notwendig, um einen ausreichenden Freiraum zum Anheben und Absenken des Schrottkorbes 32 über dem Ansatz 40 beim Wechseln des Schrottkorbes 32 bzw. beim Kippen des Ofengefäßes zum Abstechen (s. Fig. 3) zu ermöglichen.

Die Absaughaube 50 weist eine untere Eintrittsöffnung auf, deren Öffnungsquerschnitt an die Form des oberen Teils des Materialkorbes 32 angepaßt ist, so daß die auf den Materialkorb abgesenkte Absaughaube 50 den Korb nach oben abdichtet.

Wie in Fig. 3 gut zu sehen ist, kann das Ofengefäß 10 mittels der Wiege 2 zum Abstechen gekippt werden (siehe die gestrichelte Darstellung des Ansatzes 40 in Fig. 3). Die Abgasleitung 61 ist dabei so ausgebildet, daß sie durch ein entsprechendes verschiebbares Teil, das in eine Hülse gleitet, in der Länge veränderlich ist

An dem Ansatz 40 sind Düsen zum Einblasen von Kohlenstaub (oder einem anderen Brennstoff) und Sauerstoff vorgesehen. An der Nachverbrennungskammer 60 ist ein Abgasanalysator (nicht dargestellt) vorgesehen, der in Echtzeit die Zusammensetzung des aus der Nachverbrennungskammer 60 ausgegebenen Abgases mißt. Die Düsen (Zufuhrvorrichtung) für Brennstoff und Sauerstoff sowie die Ventile 64 und 65 und der Abgasanalysator sind mit einer Steuerung verbunden, die zur Steuerung und Regelung der Abgaszusammensetzung programmierbar ist.

Die in Fig. 1 gezeigte erste Konfiguration der ersten Ausführungsform dient zum Betrieb des Lichtbogenofens als Schachtofen. Derjenige Materialkorb 32, der über dem Ansatz 40 positioniert ist, hat dabei die Funktion des Schachtes, der oben durch die Absaughaube 50 abgedeckt ist. Die Wechselvorrichtung kann den Materialkorb 32 in ca. 30 s wechseln. Derart kann das Material in einem ersten Materialkorb während der Feinungsperiode des vorhergehenden Einschmelzvorgangs vorgewärmt werden. Wenn nach dem Abstich des vorhergehenden Einschmelzvorgangs der Ofen neu gefüllt wird, kann diese vorgewärmte Materialcharge in den Ofen chargiert werden (siehe Fig. 2). Dann kann innerhalb von 30 s ein zweiter Materialkorb 32 (rechts in Fig. 2), der mit einer zweiten Charge gefüllt ist, über dem Ansatz 40 positioniert werden, so daß diese Charge während des Einschmelzens der ersten Charge vorgewärmt wird. Wiederum dient der Materialkorb 32 als Schacht.

Wenn an der Chargiervorrichtung 30, oder den Materialkörben 32 oder ähnlichem Wartungsoder Reparaturarbeiten auszuführen sind, kann der Lichtbogenofen der ersten Ausführungsform in der in den Fig. 5 bis 8 gezeigten zweiten Konfiguration als herkömmlicher Ofen mit Deckel (nicht als Schachtofen) betrieben werden, um einen völligen Stillstand zu vermeiden.

Dazu wird die Chargieröffnung 42 des Ansatzes 40 mit einem Deckel 43 verschlossen. Zum Chargieren kann entweder in herkömmlicher Weise der Deckel 20 mit dem Ansatz 40 (und dem Deckel 43) sowie den Elektroden 71 angehoben und weggeschwenkt werden, oder es kann nach Abheben des Deckels 43 durch den Ansatz 40 chargiert werden.

Der leere Raum im Ansatz 40, der durch den Deckel 43 abgeschlossen ist, dient dabei als herkömmlicher Ofenabgaskrümmer.

Da sich die zweite Konfiguration im übrigen nicht von der ersten Konfiguration unterscheidet, wird die weitere Beschreibung hier weggelassen.

Eine zweite Ausführungsform des Lichtbogenofens der Erfindung ist in Fig. 9 gezeigt. Wie bereits oben beschrieben wurde, ist bei dieser Ausführungsform die Wechselvorrichtung 33 mit einzeln um eine horizontale Achse 36 verschwenkbaren Auslegern 34 vorgesehen. Die Ausleger 34 können auch als ein Arm einer Wippe gemeinsam um die Achse 36 geschwenkt werden.

In Fig. 9 ist gut zu erkennen, was für alle Ausführungsformen der Erfindung gilt, daß die Bauhöhe über dem Schacht merklich reduziert werden kann, da kein Platz für einen weiteren Schrottkorb oder Chargiergutbehälter, der beim Chargieren von dem Kran 90 über dem Schacht bzw. Materialkorb 32 gehalten wird, vorhanden sein muß.

In Fig. 9 ist eine Deckenabsaugung 100 gezeigt, die über eine Abgasleitung 101 mit einer Abgasentsorgung verbunden ist. Dieses kann zum Beispiel die Nachbrennkammer 60 oder eine andere Vorrichtung sein.

Für alle Ausführungsformen gilt, daß ein solcher Lichtbogenofen für eine bestimmte Menge von einzuschmelzendem Material ausgelegt ist. So gibt es zum Beispiel 100 t Öfen oder 160 t Öfen. Eine solche Menge an einzuschmelzendem Material entspricht einem bestimmten Volumen von Einsatzmaterial, zum Beispiel von Schrott.

Das Ofengefäß und der Ansatz sind bei den Ausführungsformen der Erfindung bevorzugterweise so bemessen, daß eine Schrottmenge, die der halben einzuschmelzenden Charge entspricht (also 50 t bei einem 100 t Ofen), in einer durch den Ansatz 40 eingefüllten Schüttsäule im ungeschmolzenen Zustand maximal bis zur Höhe H2 (maximale Füllhöhe) des Ansatzes 40 reicht. Das bedeutet, daß näherungsweise das Volumen des Ofengefäßes, das durch eine Schüttsäule eingenommen wird, die von der Unterkante 44 des Ansatzes 40, die der Elektrodenanordnung 70 am nächsten liegt, im 45°-Winkel zu dem Boden des Untergefäßes 11 reicht und den unter dem Ansatz gelegenen Teil des Gefäßes ausfüllt, im wesentlichen dem Volumen C eines Materialkorbs 32 entspricht (Fig. 2).

Die Unterkante der Ansaugöffnung 41, die in der Höhe H2 liegt, ist bevorzugterweise leicht höher als die den.Elektroden zugewandte Unterkante 44 des Ansatzes, wie in Fig. 2 gut zu erkennen ist. In Fig. 2 ist die Schüttsäule der Charge C leicht höher als die den Elektroden zugewandte Unterkante 44 des Ansatzes 40, was eine noch tolerierbare Größe darstellt, wie später anhand der Beschreibung des Betriebs des Ofens klar wird.

Es sind nun der Betrieb des Lichtbogenofens der Ausführungsformen der Erfindung in der ersten Konfiguration beschrieben.

In der Feinungsperiode eines vorhergehenden Einschmelzvorgangs wird ein gefüllter Schrottkorb 32 durch die Wechselvorrichtung 33 über der Chargieröffnung 42 des Ansatzes 40 mit in Schließstellung befindlichen Fingern 31 gehalten. Dadurch wird das in dem Schrottkorb 32 befindliche Material durch die zwischen den Fingern 31 und durch den Schrottkorb 32 aufsteigenden heißen Gase erwärmt. Die Verweildauer des Schrottkorbes 32 beträgt, abhängig von der sogenannten Tap-zu-Tap-Zeit (Zeitintervall zwischen zwei Abstichen) ca. 20 Minuten. Dabei nehmen auch die den Innenraum auskleidenden Gußplatten 37 Wärme auf, die sie wiederum an den Schrott abgeben. Die Oberseite des Schrottkorbes 32 ist durch die Abdeckhaube 50 verschlossen, wodurch die durch den Schrottkorb 32 aufsteigenden Gase zu der Nachbrennkammer 60 weitergeleitet werden.

Nachdem der Abstich des vorhergehenden Einschmelzvorgangs erfolgt ist, wird in einem Zustand, in dem die Elektroden 71 aus dem Gefäß herausgezogen sind, die sich in dem Materialkorb 32 befindliche Charge durch Öffnen der Finger 31 chargiert, was in dem in Fig. 2 gezeigten Zustand resultiert. Da die Elektroden 71 herausgezogen sind, kann es nicht zu einem Elektrodenbruch durch Schrottstürze kommen.

Nach dem Entladen ist die Schrottsäule nicht so hoch, daß das Zurückschwenken der Finger 31 in die Schließstellung behindert wird.

Daher wird der entleerte Materialkorb 32 sofort verschlossen und durch entsprechendes Betreiben der Wechselvorrichtung 33 durch den nächsten, gefüllten Schrottkorb 32 ersetzt.
Für dieses Ersetzen werden die Haube 50 und die Schrottkörbe 32 angehoben, dann werden die Ausleger 34 des Schrottwechslers 33 um 180° um die senkrechte Drehachse 38 gedreht, und dann werden der gefüllte Schrottkorb 32 und die Absaughaube 50 in Richtung des Ansatzes 40 (siehe die Pfeile B in Fig. 3) abgesenkt. In der Zwischenzeit sind die Elektroden 71 wieder in das Ofengefäß abgesenkt worden und nachdem der zweite Schrottkorb 32 in seiner Position ist, werden die Elektroden mit Leistung zum Schmelzen der Charge aus dem ersten Schrottkorb versorgt.

Die Elektrodenanordnung 70 wird bei der Drehbewegung der Materialkörbe um die Achse 38 (Schwenkbewegung) nicht in horizontaler Richtung von dem Ansatz 40 bzw. den Materialkörben 32 wegbewegt. Wie bereits oben beschrieben wurde, ist bei einer Ausbildung des Materialkorbs mit rechteckigem Querschnitt in horizontaler Richtung die Anordnung entweder so, daß die Ecken bei der Schwenkbewegung die Elektroden gerade nicht berühren, oder daß der Materialkorb zuerst soweit von der Elektrodenanordnung 70 in horizontaler Richtung (durch horizontale Bewegung oder durch Schwenken um die horizontale Achse 36) wegbewegt wird, bis die Ecken bei der Schwenkbewegung nicht mehr mit der Elektrodenanordnung 70 kollidieren. Alternativ weist wenigstens die den Elektroden zugewandte Seitenwand des Materialkorbes 32 die konvexe Form mit dem Krümmungsradius R der Kreisbahn, die gerade nicht mit der Elektrodenanordnung 70 kollidiert, auf. In allen drei Fällen wird verhindert, daß die Elektrodenanordnung 70 in horizontaler Richtung von dem Ansatz 40 wegbewegt werden muß.

Beim Einschmelzen der Charge aus dem ersten Korb wird in gleicher Weise das Material im zweiten Schrottkorb 32, der über der Chargieröffnung 42 positioniert ist, vorgewärmt.

Wenn das Material aus dem ersten Korb eingeschmolzen ist, wird die Charge aus dem zweiten Korb durch Öffnen der Finger 31 in das Ofengefäß chargiert, nachdem die Elektroden 71 abermals aus dem Gefäß gezogen worden sind (um einen Bruch durch stürzenden Schrott zu vermeiden).

Da ein relativ großes Schmelzbad in dem Untergefäß 11 vorhanden ist, schwimmt der Schrott der zweiten Charge stärker in Richtung der dem Ansatz 40 in horizontaler Richtung abgewandten Gefäßseite, so daß die Schüttsäule nicht die Höhe erreicht, die in Fig. 2 gezeigt ist, sondern deutlich niedriger ist.

Nun werden wiederum der leere Schrottkorb 32 und die Haube 50 angehoben, und der leere Schrottkorb 32 wird durch einen vollen Schrottkorb 32, der mittlerweile durch den Kran 90 auf den anderen Ausleger 34 gesetzt wurde, ersetzt. Derart wird beim Einschmelzen der zweite Charge die nächste Charge, die bereits für den nächsten Einschmelzvorgang vorgesehen ist, vorgewärmt.

Nunmehr wird nach dem erneuten Absenken der Elektroden 71 die zweite Charge eingeschmolzen, so daß danach ein Schmelzbad vorhanden ist, das aus der ersten und der zweiten Charge gebildet ist.

Bei der beschriebenen Ausführungsform sind das Ofengefäß und die Schrottkörbe so ausgelegt, daß zwei Chargen zur vollen Befüllung des Ofens ausreichen. Es ist natürlich auch möglich, die entsprechenden Abmessungen des Ofengefäßes so zu ändern, daß ein Drittel oder ein anderer Bruchteil der gesamten Ofenfüllung auf einmal chargiert wird.

Beim Wechsel der Materialkörbe ist die Chargieröffnung 42 nach oben offen. Durch die Absaugöffnung 41 werden auch in diesem Zustand ca. 40 bis 50 % der Abgase abgesaugt. Die übrigen Abgase steigen aufgrund ihrer Temperatur nach oben und werden zum allergrößten Teil durch die obere Absaughaube 50 aufgefangen. Die verbleibenden Abgase gelangen zu der Deckenabsaugung 100 (siehe Fig. 9).

Im Vergleich zu herkömmlichen Schachtöfen wird durch die Absaugöffnung 41 und die obere Absaughaube 50 die Belastung der Deckenabsaugung 100 wesentlich reduziert, wie später beschrieben wird.

Nach der Feinungsperiode für das Schmelzbad aus der eingeschmolzenen ersten und zweiten Charge wird in herkömmlicher Weise ein Abstechen ausgeführt.

Danach wird der oben beschriebene Betrieb wiederholt.

Sollte der Betrieb mit dem Wechsel der Schrottkörbe nicht möglich sein, zum Beispiel wegen Reparaturarbeiten, so kann der Lichtbogenofen nach den Ausführungsformen der Erfindung in der zweiten Konfiguration betrieben werden, die in den Fig. 5 bis 8 gezeigt ist. Der Betrieb in dieser Konfiguration unterscheidet sich nicht von dem Betrieb eines herkömmlichen Lichtbogenofens. Die Beschreibung wird daher hier weggelassen.

Die Ausbildung des Lichtbogenofens nach den Ausführungsformen der Erfindung und die daraus resultierende Möglichkeit des entsprechend beschriebenen Betriebs ermöglichen die folgenden Vorteile.

Aufgrund der relativ geringen Verweildauer der Materialkörbe 32 über dem Ansatz 40 (ca. 20 min bei einem Einschmelzvorgang) und deren Auswechslung durch einen an anderer Stelle mit Chargiergut gefüllten anderen Materialkorb ist die thermische Belastung der Finger 31 und der Seitenwände 37 so gering, daß auf eine Wasserkühlung verzichtet werden kann.

Aufgrund der Tatsache, daß anstelle des herkömmlichen Schachtes die austauschbaren Materialkörbe 32 verwendet werden und es daher beim Chargieren nicht wie herkömmlich notwendig ist, die gesamte Menge des zu chargierenden Schrotts auf einmal von oben in den Schacht zu chargieren, sondern auf dem Schrottplatz in kleineren Portionen in den Materialkorb chargiert wird, werden die Fallhöhe des in Richtung der Finger 31 zu chargierenden Schrottes als auch die gleichzeitig in den Materialkorb zu chargierende Menge drastisch reduziert. Daher kann auf eine aufwendige Lagerung der Finger verzichtet werden, was in einer kleineren Bauweise und erheblichen Kosteneinsparung resultiert. Da auf die Wasserkühlung der Finger und der Seitenwände verzichtet werden kann, treten ebenfalls keine Probleme durch Leckagen die durch stürzenden Schrott verursacht werden können, auf.

Die Materialkörbe 32 ersetzen die in Schrott verarbeitenden Stahlwerken ohnehin vorhandenen Schrottkörbe, so daß diesbezüglich kein zusätzlicher Aufwand entsteht.

Auch bei herkömmlichen Schachtöfen war es notwendig, zu Reparaturzwecken eine Möglichkeit zum Verfahren des Schachtes vorzusehen. Diese Funktion wird von der Wechselvorrichtung mit übernommen, so daß kein nennenswerter zusätzlicher Aufwand entsteht.

Bei den herkömmlichen Schachtöfen stand am Beginn des Einschmelzens eine Schrottsäule bis in den Schacht hinein. Daher war einerseits das Abgas über der Schrottsäule kalt und andererseits bestand keine Möglichkeit, die Abgastemperatur und/oder die Abgaszusammensetzung unter Ausnutzung der immer im Ofen vorhandenen Wärme zu regeln.

Durch den immer in dem Ansatz 40 vorhandenen leeren Raum, in dem die Absaugöffnung 41 und die Düsen für Brennstoff und/oder Sauerstoff vorhanden sind, ist es in einfacher Weise möglich, zu jedem Zeitpunkt des Einschmelzvorgangs die Abgaszusammensetzung zu steuern und zu regeln. Wenn beispielsweise die Abgastemperatur, insbesondere auch diejenige des Anteils, der durch die Haube 50 und/oder die Deckenabsaugung 100 aufgenommen wird, zu niedrig liegt, so kann über der Schrottsäule, über der immer eine Zündtemperatur von ca. 500°C herrscht (allein schon wegen des auf ca. 500°C vorgewärmten Schrotts), durch Einblasen von Kohlenstoff und/oder Sauerstoff heißes Abgas erzeugt werden, das über die Absaugöffnung 41 und die Abgasleitung 61 der Nachbrennkammer 60 zugeführt wird. Die Nachverbrennungskammer hat den Abgasanalysator, so daß über die Steuerung durch Regelung der Zufuhr des Brennstoffs, des Sauerstoffs und die Stellung der Ventile 64 und 65 die optimale Zusammensetzung der nachzuverbrennenden Abgase in der Nachverbrennungskammer 60 eingestellt werden kann. In gleicher Weise kann zum Beispiel eine sogenannte CO-Schwarte durch Einblasen von Sauerstoff in den Ansatz 40 vernichtet werden.

Die durch die horizontale Austauschbarkeit der Materialkörbe 32 resultierende Einsparung von Bauhöhe über dem Ofen wurde bereits oben diskutiert.

Gegenüber einem herkömmlichen Lichtbogenofen kann die Gesamtleistung der Abgasreinigung um ca. 60 % reduziert werden, da der allergrößte Teil der entweichenden Abgase durch die Absaugöffnung 41 und die Absaughaube 50, selbst bei fehlendem Materialkorb 32, aufgenommen werden.

Durch das Fehlen des Stützgerüstes des Schachtes kann der Materialkorb 32 wesentlich näher an die Elektrodenanordnung 70 gesetzt werden. Daraus folgt, daß die bei herkömmlichen Schachtöfen notwendige Hufeisenform stark zu den energetisch und baulich günstigeren runden Formen vermindert werden kann.

## Patentansprüche

1. Metallurgischer Ofen, mit
einem Gefäß (10),
einem Deckel (20) für das Gefäß,
einer Chargiervorrichtung (30) zum Chargieren von zu schmelzendem Chargiergut in das Gefäß, die ein schwenkbares Rückhaltemittel (31) und ein Volumen (C) zur Aufnahme von
Chargiergut aufweist, und
einem Ansatz (40), der die Chargieröffnung (42) aufweist und an dem Deckel (20) oder an dem Gefäß (10) angebracht ist,
wobei der Ofen eine maximale Füllhöhe (H2) aufweist,
wobei das schwenkbare Rückhaltemittel zum Chargieren in den Ansatz geschwenkt wird,
wobei das Gefäß, der Deckel, die Chargiervorrichtung, das Rückhalteorgan und der Ansatz so bemessen sind, daß der Schwenkbereich des Rückhalteorgans oberhalb der maximalen Füllhöhe (H2) liegt,
**dadurch gekennzeichnet,**
**daß** die Chargiervorrichtung wenigstens zwei selbsttragende Materialkörbe (32) aufweist, die entfernbar über dem Ansatz (40) positionierbar sind und jeweils einen Innenraum aufweisen, der an der Unterseite des Materialkorbes (32) durch das Rückhaltemittel (31) derart verschließbar ist, daß der Durchtritt von Gas möglich ist, und das Volumen (C) zur Aufnahme des Chargierguts aufweist, und
**daß** eine Wechselvorrichtung (33) zum Wechseln und Positionieren der Materialkörbe (32) vorgesehen ist.

2. Ofen nach Anspruch 1, **dadurch gekennzeichnet,**
**daß** eine Absaugöffnung (41) in dem Ansatz (40) vorgesehen ist.

3. Ofen nach Anspruch 2, **dadurch gekennzeichnet,**
**daß** die Absaugöffnung (41) unterhalb des Schwenkbereichs des Rückhaltemittels vorgesehen ist.

4. Ofen nach Anspruch 2 oder 3, **dadurch gekennzeichnet,**
**daß** die Absaugöffnung (41) oberhalb der maximalen Füllhöhe (H2) angeordnet ist.

5. Ofen nach einem der Ansprüche 1 bis 4, **dadurch gekennzeichnet,**
**daß** die inneren Seitenwände des selbsttragenden Materialkorbs (32) mit wärmespeichernden Platten, vorzugsweise Gußplatten, ausgekleidet sind.

6. Ofen nach einem der Ansprüche 1 bis 5, **dadurch gekennzeichnet,**
**daß** das an dem selbsttragenden Materialkorb (32) angebrachte Rückhaltemittel (31) als eine Mehrzahl von schwenkbaren Fingern (31) ausgebildet ist, die unterhalb der Seitenwände des Materialkorbes angelenkt sind.

7. Ofen nach Anspruch 6, **dadurch gekennzeichnet,**
**daß** die Finger Stahlfinger sind, die einen Mindestdurchmesser von 100 mm aufweisen.

8. Ofen nach einem der Ansprüche 1 bis 7, **dadurch gekennzeichnet,**
**daß** das Rückhaltemittel (31) durch ein Stellglied (35), das an dem selbsttragenden Materialkorb (32) angebracht ist, zum Öffnen und Schließen der Unterseite des Materialkorbes schwenkbar ist.

9. Ofen nach einem der Ansprüche 1 bis 8, **dadurch gekennzeichnet,**
**daß** die Chargieröffnung (42) durch einen Deckel (43) verschließbar ist.

10. Ofen nach einem der Ansprüche 1 bis 9, **gekennzeichnet durch**
eine Absaugvorrichtung (50), die im wesentlichen in der senkrechten Verlängerung des Ansatzes (40) oberhalb der Chargiervorrichtung (30) angeordnet und zum Absaugen von Abgas, das **durch** den Ansatz (40) nach oben steigt, ausgebildet ist.

11. Ofen nach einem der Ansprüche 1 bis 10, **gekennzeichnet durch**
eine Vorrichtung zum Einbringen von Brennstoff wie Kohlenstaub und/oder von Sauerstoff in den Ansatz (40).

12. Ofen nach einem der Ansprüche 1 bis 11, **gekennzeichnet durch**
eine Nachverbrennungskammer (60) zur Nachverbrennung von Schadstoffen in den Abgasen des Ofens.

13. Ofen nach Anspruch 11 und 12, **gekennzeichnet durch**
einen Abgasanalysator an der Nachverbrennungskammer und
eine Steuerung, die mit dem Abgasanalysator und der Vorrichtung zum Zuführen von Brennstoff und/oder Sauerstoff verbunden ist,
bei dem die Steuerung als Reaktion auf das Analyseergebnis des Abgasanalysators die Vorrichtung zum Zuführen von Brennstoff und/oder Sauerstoff derart ansteuert, daß die Temperatur des Abgases auf vorbestimmte Werte geregelt wird und/oder als Reaktion auf vorbestimmte Abgastypen eine Brennstoffzugabe und/oder Sauerstoffzugabe erfolgt.

14. Ofen nach einem der Ansprüche 1 bis 13, **dadurch gekennzeichnet,**
**daß** die Chargiervorrichtung eine Wechselvorrichtung (33) zum Wechseln und Positionieren eines oder mehrerer selbsttragender Materialkörbe aufweist, die einen Materialkorb, der über dem Ansatz (40) positioniert ist, in einer horizontalen Ebene und/oder in einer vertikalen Ebene zum Wechseln und Positionieren verschwenkt.

15. Selbsttragender Materialkorb zum Aufnehmen von Schrott, mit
Seitenwänden (37), die einen Innenraum mit einem in horizontaler Richtung im wesentlichen rechteckigen oder konvex vieleckigen Querschnitt begrenzen, und
einem Rückhaltemittel (31), das zum Verschließen und Öffnen der Unterseite des Innenraums durch ein Stellglied (35) verschwenkbar ist,
bei dem das Rückhaltemittel von einer Mehrzahl von Fingern (31) gebildet wird,
jeder der Finger eine Abmessung in Längsrichtung, die ungefähr der Hälfte der Abmessung einer ersten Seitenwand in horizontaler Richtung entspricht, aufweist,
an der Unterseite der Seitenwände, die im wesentlichen senkrecht zu der ersten Seitenwand verlaufen, je eine Welle (31a) vorgesehen ist, wobei an jeder der Wellen (31a) ein Teil der Mehrzahl von Fingern verschwenkbar angelegt ist, und
die Finger (31) so ausgebildet und angelenkt sind, daß sie in der Schließstellung mit ihren Enden in einer im wesentlichen horizontalen Ebene liegen, so daß die äußeren Enden der Finger in dieser Schließstellung durch ein Widerlager (81) abstützbar sind, und daß die Finger seitlich voneinander so beabstandet sind, daß ein Zwischenraum zum Durchtritt von Gas verbleibt.

16. Materialkorb nach Anspruch 15, **dadurch gekennzeichnet,**
**daß** der Materialkorb dazu angepaßt ist, durch eine Wechselvorrichtung (30) gehalten und in einer Schwenkbewegung geschwenkt zu werden, und
das wenigstens eine der Seitenwände konvex mit einem Krümmungsradius in horizontaler Richtung, der im wesentlichen dem Radius (R) der Schwenkbewegung entspricht, ausgebildet ist.

## Claims

1. A metallurgical furnace with
a vessel (10),
a cover (20) for the vessel,
a charging apparatus (30) for charging a charging material to be smelted into the vessel, which has a pivotable retaining means (31) and a volume (C) for receiving charging material, and
a projection (40) having a charging opening (42) and being mounted to the cover (20) or to the vessel (10),
wherein the furnace has a maximum filling height (H2),
wherein the pivotable retaining means is pivoted into the projection for the charging operation,
wherein the vessel, the cover, the charging apparatus, the retaining member and the projection are dimensioned so that the range of pivotal movement of the retaining means lies above the maximum filling height (H2),
**characterised in that**
the charging apparatus has at least two self-supporting material baskets (32) that can be positioned removably above the projection (40), each having a respective internal space that is closable at the underside of the material basket (32) by the retaining means (31) in such a way that the passage of gas therethrough is possible and has the volume (C) for receiving the charging material, and
a change device (33) is provided for changing and positioning the material baskets (32).

2. A furnace according to claim 1 **characterised in that** an extraction opening (41) is provided in the projection (40).

3. A furnace according to claim 2 **characterised in that** the extraction opening (41) is provided below the range of pivotal movement of the retaining means.

4. A furnace according to claim 2 or claim 3 **characterised in that** the extraction opening (41) is arranged above the maximum filling height (H2).

5. A furnace according to one of claims 1 to 4 **characterised in that** the inner side walls of the self-supporting material basket (32) are lined with heat-storing panels, preferably cast panels.

6. A furnace according to one of claims 1 to 5 **characterised in that** the retaining means (31) mounted to the self-supporting material basket (32) is in the form of a plurality of pivotable fingers (31) that are pivoted below the side walls of the material basket.

7. A furnace according to claim 6 **characterised in that** the fingers are steel fingers having a minimum diameter of 100 mm.

8. A furnace according to one of claims 1 to 7 **characterised in that** the retaining means (31) is pivotable by an actuating member (35) mounted to the self-supporting material basket (32) for opening and closing the underside of the material basket.

9. A furnace according to one of claims 1 to 8 **characterised in that** the charging opening (42) is closable by a cover (43).

10. A furnace according to one of claims 1 to 9 **characterised by** an extraction device (50) that is disposed substantially in the perpendicular prolongation of the projection (40) above the charging device (30) and is adapted for extracting waste gas that rises upwardly through the projection (40).

11. A furnace according to one of claims 1 to 10 **characterised by** a device for introducing fuel, such as coal dust and/or oxygen, into the projection (40).

12. A furnace according to one of claims 1 to 11 **characterised by** a post-combustion chamber (60) for the post-combustion of pollutants in the waste gases from the furnace.

13. A furnace according to claim 11 and claim 12 **characterised by**
a waste gas analyser at the post-combustion chamber, and
a control means connected to the waste gas analyser and the device for feeding fuel and/or oxygen,
in which the control means in response to the analysis result of the waste gas analyser actuates the device for feeding fuel and/or oxygen, in such a way that the temperature of the waste gas is regulated to predetermined values and/or as a reaction to predetermined types of waste gas a feed of fuel and/or a feed of oxygen is effected.

14. A furnace according to one of claims 1 to 13 **characterised in that** the charging apparatus has a change device (33) for changing and positioning one or more self-supporting material baskets, which pivots a material basket which is positioned above the projection (40) in a horizontal plane and/or in a vertical plane for the change and positioning operation.

15. A self-supporting material basket for receiving scrap with
side walls (37) defining an internal space having a cross-section that is substantially rectangular or convexly polygonal in a horizontal direction, and
a retaining means (31) pivotable by an actuating member (35) for closing and opening the underside of the internal space,
wherein the retaining means is formed by a plurality of fingers (31),
each finger has a dimension in the lengthwise direction that approximately corresponds to half the dimension of a first side wall in the horizontal direction,
a respective shaft (31a) provided at the underside of the side walls that extend substantially perpendicularly to the first side wall, wherein a part of the plurality of fingers is pivotably mounted to each of the shafts (3 1a), and
the fingers (31) are designed and pivoted so that in the closed position they lie with their ends in a substantially horizontal plane so that the outer ends of the fingers can be supported in that closed position by a support means (81) and the fingers are laterally spaced from each other so that an intervening space remains for gas to pass therethrough.

16. A material basket according to claim 15 **characterised in that** the material basket is adapted to be held by a change device (30) and pivoted in a pivotal movement, and
at least one of the side walls has a convex configuration with a radius of curvature in a horizontal direction that substantially corresponds to the radius (R) of the pivotal movement.

## Revendications

1. Four métallurgique, comprenant :
un récipient (10),
un couvercle (20) pour le récipient,
un dispositif de chargement (30), pour charger un produit à charger à faire fondre dans le récipient, qui présente un moyen de retenue (31) pivotant et un volume (C) pour recevoir du produit à charger, et
un appendice (40), présentant l'ouverture de chargement (42) et monté sur le couvercle (20) ou le récipient (10),
le four présentant une hauteur de remplissage maximale (H2),
le moyen de retenue pivotant étant pivoté dans l'appendice pour effectuer le chargement, le récipient, le couvercle, le dispositif de chargement, l'organe de retenue et l'appendice étant dimensionnés de manière que la plage de pivotement de l'organe de retenue soit située au-dessus de la hauteur de remplissage maximale (H2),
**caractérisé en ce que** le dispositif de chargement présente au moins deux paniers à matière (32) autoporteurs, qui sont susceptibles d'être positionnés au-dessus de l'appendice (40), d'une façon permettant d'être éloignés, et présentent chacun un espace intérieur, obturable en face inférieure du panier à matière (32) par le moyen de retenue (31), de manière que le passage de gaz soit possible et présente le volume (C) pour recevoir le produit à charger, et
**en ce qu'**un dispositif de changement (33) est prévu pour effectuer le changement et le positionnement des paniers à matière (32).

2. Four selon la revendication 1, **caractérisé en ce qu'**une ouverture d'aspiration (41) est prévue dans l'appendice (40).

3. Four selon la revendication 2, **caractérisé en ce que** l'ouverture d'aspiration (41) est prévue au-dessous de la plage de pivotement du moyen de retenue.

4. Four selon la revendication 2 ou 3, **caractérisé en ce que** l'ouverture d'aspiration (41) est disposée au-dessus de la hauteur de remplissage maximal (H2).

5. Four selon l'une des revendications 1 à 4, **caractérisé en ce que** les parois latérales intérieures du panier à matière (32) autoporteur sont revêtues de plaques stockant la chaleur, de préférence, de plaques de fonte.

6. Four selon l'une des revendications 1 à 5, **caractérisé en ce que** les moyens de retenue (31), montés sur le panier à matière (32) autoporteur, sont réalisés sous la forme d'une pluralité de doigts (31) pivotants, articulés au-dessous des parois latérales du panier à matière.

7. Four selon la revendication 6, **caractérisé en ce que** les doigts sont des doigts en acier, présentant un diamètre minimal de 100 mm.

8. Four selon l'une des revendications 1 à 7, **caractérisé en ce que** les moyens de retenue (31) sont susceptibles de pivoter au moyen d'un organe de réglage (35), monté sur le panier à matière (32) autoporteur, pour assurer l'ouverture et la fermeture de la face inférieure du panier à matière.

9. Four selon l'une des revendications 1 à 8, **caractérisé en ce que** l'ouverture de chargement (42) est susceptible d'être obturée par un couvercle (43).

10. Four selon l'une des revendications 1 à 9, **caractérisé par** un dispositif d'aspiration (50), disposé sensiblement dans le prolongement vertical de l'appendice (40), au-dessus du dispositif de chargement (30) et réalisé pour aspirer des gaz d'échappement, montant vers le haut en passant par l'appendice (40).

11. Four selon l'une des revendications 1 à 10, **caractérisé par** un dispositif d'introduction de combustible, tel que de la poussière de charbon et/ou de l'oxygène, dans l'appendice (40).

12. Four selon l'une des revendications 1 à 11, **caractérisé par** une chambre de post-combustion (60), pour la post-combustion des substances nocives se trouvant dans les gaz d'échappement du four.

13. Four selon les revendications 11 et 12, **caractérisé par** :
un catalyseur de gaz d'échappement sur la chambre de poste de combustion et
une commande, reliée au catalyseur de gaz d'échappement et au dispositif d'amenée de combustible et/ou d'oxygène,
dans lequel la commande, en réaction au résultat d'analyse du catalyseur de gaz d'échappement commande le dispositif d'amenée de combustible et/ou d'oxygène, de manière que la température des gaz d'échappement soit réglée à des valeurs prédéterminées et/ou qu'un apport de combustible et/ou un apport d'oxygène s'effectue, en réaction à des types de gaz d'échappement prédéterminés.

14. Four selon l'une des revendications 1 à 13, **caractérisé en ce que** le dispositif de chargement présente un dispositif de changement (33), pour changer et positionner un ou plusieurs paniers à matière autoporteurs, le dispositif de changement faisant pivoter un panier de matière, positionné au-dessus de l'appendice (40), dans un plan horizontal et/ou dans un plan vertical, pour procéder au changement et au positionnement.

15. Panier à matière autoporteur pour recevoir des ferrailles, avec des parois latérales (37), délimitant un espace intérieur à section transversale sensiblement rectangulaire en direction horizontale ou polygonale convexe, et avec des moyens de retenue (31) susceptibles de pivoter au moyen d'un organe de réglage (35) pour fermer et ouvrir la face inférieure de l'espace intérieur,
dans lequel les moyens de retenue sont formés par une pluralité de doigts (31),
chacun des doigts présentant une dimension longitudinale correspondant à peu près à la moitié de la dimension d'une première paroi latérale en direction horizontale,
en face inférieure des parois latérales, s'étendant sensiblement perpendiculairement par rapport à la première paroi latérale étant respectivement prévu un arbre (31a), sachant que, sur chacun des arbres (31a) est appliquée, de façon à pouvoir pivoter une partie de la pluralité des doigts, et
les doigts (31) sont configurés et articulés de manière que, en position de fermeture, par leurs extrémités, ils se situent dans un plan sensiblement horizontal, de manière que les extrémités extérieures des doigts puissent prendre appui, en cette position de fermeture, au moyen d'un contre-appui (81) et que les doigts puissent être espacés les uns des autres latéralement, de manière qu'un espace intermédiaire subsiste, pour permettre le passage de gaz.

16. Panier à matière selon la revendication 15, **caractérisé en ce que**
le panier à matière est adapté pour être maintenu au moyen d'un dispositif de changement (30) et être pivoté en un mouvement de pivotement, et
**en ce qu'**au moins l'une des parois latérales est convexe, avec un rayon de courbure en direction horizontale qui correspond sensiblement au rayon (R) du mouvement pivotant.
